# EUROPÄISCHE PATENTSCHRIFT

(11) **EP 1 423 550 B1**
(45) Veröffentlichungstag und Bekanntmachung des Hinweises auf die Patenterteilung: **13.05.2009**
(21) Anmeldenummer: 02754540.9
(22) Anmeldetag: 12.08.2002
(51) Int. Cl.: C22C 45/10, C22C 16/00

(54) **HOCHFESTE, BEI RAUMTEMPERATUR PLASTISCH VERFORMBARE BERYLLIUMFREIE FORMKÖRPER AUS ZIRKONLEGIERUNGEN**
HIGH-STRENGTH BERYLLIUM-FREE MOULDED BODY MADE FROM ZIRCONIUM ALLOYS WHICH MAY BE PLASTICALLY DEFORMED AT ROOM TEMPERATURE
CORPS MOULES TRES RIGIDES EN ALLIAGES DE ZIRCONIUM, EXEMPTS DE BERYLLIUM, PLASTIQUEMENT DEFORMABLES A TEMPERATURE AMBIANTE

(30) Priorität: 30.08.2001 DE 10143683; 19.04.2002 DE 10218281
(43) Veröffentlichungstag der Anmeldung: 02.06.2004
(73) Patentinhaber: Leibniz-Institut für Festkörper- und Werkstoffforschung Dresden e.V., 01069 Dresden (DE)
(72) Erfinder: KÜHN, Uta, 01728 Possendorf (DE); ECKERT, Jürgen, D-64297 Darmstadt (DE); SCHULTZ, Ludwig, 01328 Dresden (DE)
(74) Vertreter: Rauschenbach, Marion
(86) Internationale Anmeldenummer: PCT/DE2002/003030
(87) Internationale Veröffentlichungsnummer: WO 2003/025242

(56) Entgegenhaltungen:
- DE-A- 19 833 329
- US-A- 5 735 975
- KUEHN U ET AL: "AS-CAST QUASICRYSTALLINE PHASE IN A ZR-BASED MULTICOMPONENT BULK ALLOY" APPLIED PHYSICS LETTERS, AMERICAN INSTITUTE OF PHYSICS. NEW YORK, US, Bd. 77, Nr. 20, 13. November 2000 (2000-11-13), Seiten 3176-3178, XP000970288 ISSN: 0003-6951
- C. C. HAYS, C. P. KIM, W. L. JOHNSON: "Improved mechanical behaviour of bulk metallic glasses containing in situ formed ductile phase dendrite dispersions" MATERIALS SCIENCE AND ENGINEERING, 31. Mai 2001 (2001-05-31), Seiten 650-655, XP002222028
- LOEFFLER J F ET AL: "CRYSTALLIZATION OF BULK AMORPHOUS ZR-TI(NB)-CU-NI-AL" APPLIED PHYSICS LETTERS, AMERICAN INSTITUTE OF PHYSICS. NEW YORK, US, Bd. 77, Nr. 4, 24. Juli 2000 (2000-07-24), Seiten 525-527, XP000954870 ISSN: 0003-6951
- CANG FAN, CHUNFEI LI, AKIHISA INOUE: "Nanocrystal composites in Zr-Nb-Cu-Al metallic glasses" JOURNAL OF NON-CRYSTALINE SOLIDS, 2000, Seiten 28-33, XP002222029

## Beschreibung

### Technisches Gebiet

Die Erfindung betrifft hochfeste und bei Raumtemperatur plastisch verformbare berylliumfreie Formkörper aus Zirkonlegierungen.

Derartige Formkörper sind einsetzbar als hochbeanspruchte Bauteile z. B. in der Flugzeugindustrie, der Raumfahrt und der Fahrzeugindustrie, aber auch für medizintechnische Geräte und Implantate im medizinischen Bereich, wenn hohe Anforderungen an die mechanische Belastbarkeit, die Korrosionsbeständigkeit und die Oberflächenbeanspruchung insbesondere bei kompliziert geformten Bauteilen gestellt werden.

### Stand der Technik

Bekannt ist, dass bestimmte mehrkomponentige metallische Werkstoffe durch rasche Erstarrung in einen metastabilen glasartigen Zustand überführt werden können (metallische Gläser), um vorteilhafte (z. B. weichmagnetische, mechanische, katalytische) Eigenschaften zu erhalten. Meist sind diese Werkstoffe wegen der erforderlichen Abkühlrate der Schmelze nur mit geringen Abmessungen in mindestens einer Dimension z. B. dünne Bänder oder Pulver herstellbar. Damit sind sie als massiver Konstruktionswerkstoff nicht geeignet (siehe z. B. T. Masumoto, Mater. Sci. Eng. A179/180 (1994) 8-16).

Bekannt sind weiterhin bestimmte Zusammensetzungsbereiche mehrkomponentiger Legierungen, in denen solche metallische Gläser auch in massiver Form, z. B. mit Abmessungen > 1 mm, durch Gießverfahren hergestellt werden können. Solche Legierungen sind z. B. Pd-Cu-Si, Pd₄₀Ni₄₀P₂₀, Zr-Cu-Ni-Al, La-Al-Ni-Cu (siehe z. B. T. Masumoto, Mater. Sci. Eng. A179/180 (1994) 8-16 und W.L. Johnson in Mater. Sci. Forum Vol. 225-227, S. 35-50, Transtec Publications 1996, Switzerland).

Bekannt sind auch insbesondere berylliumhaltige metallische Gläser mit Zusammensetzungen der chemischen Formel (Zr₁₋ₓTiₓ)ₐ₁ ETMₐ₂(Cu_{1-y}Ni_{y})_{b1}LTM_{b2}Be_{c}, die in Abmessungen > 1 mm hergestellt werden können (A. Peker, W.L. Johnson, US-PS 5 288 344). Dabei bezeichnen die Koeffizienten a1, a2, b1, b2, c, x, y die Elementanteile in Atom-%, ETM ein frühes Übergangsmetall (Early Transition Metal) und LTM ein spätes Übergangsmetall (Late Transition Metal).

Weiterhin bekannt sind metallische Glas-Formkörper in allen ihren Dimensionen > 1 mm in bestimmten Zusammensetzungsbereichen der quinären Zr-Ti-Al-Cu-Ni-Legierungen (L.Q. Xing et al. Non-Cryst. Sol. 205-207 (1996) p. 579-601, presented at 9th Int. Conf. On Liquid and Amorphous Metals, Chicago, Aug. 27-Sep. 1, 1995; Xing et al., Mater. Sci. Eng. A 220 (1996) 155-161) und der pseudoquinären Legierung (Zr, Hf)ₐ (Al, Zn)_{b} (Ti, Nb)_{c} (CuₓFe_{y} (Ni, Co)_{z})_{d} (DE 197 06 768 A1; DE 198 33 329 C2).

Es ist auch eine Zusammensetzung für eine mehrkomponentige berylliumhaltige Legierung mit der chemischen Formel (Zr_{100-a-b}TiₐNb_{b})₇₅(BeₓCu_{y}Ni_{z})₂₅ bekannt. Dabei bezeichnen die Koeffizienten a, b die Elementanteile in Atom-% mit a = 18,34; b = 6,66 und die Koeffizienten x, y, z bezeichnen spröde glasartige Matrix und eine duktile, plastisch verformbare dendritische kubisch raumzentrierte Phase. Dadurch tritt eine erhebliche Verbesserung der mechanischen Eigenschaften bei Raumtemperatur ein, besonders im Bereich der makroskopischen Dehnung (C.C. Hays, C.P. Kim und W.L. Johnson, Phys. Rev. Lett. 84, 13, p. 2901-2904, (2000)). Ein gravierender Nachteil dieser Legierung besteht jedoch in der Verwendung des hoch toxischen Berylliums.

### Darstellung der Erfindung

Der Erfindung liegt die Aufgabe zugrunde, berylliumfreie hochfeste und plastisch verformbare Formkörper aus Zirkonlegierungen zur Verfügung zu stellen, die gegenüber den genannten metallischen Gläsern makroskopische Plastizität und Verförmungsverfestigung bei Umformprozessen bei Raumtemperatur besitzen; ohne dass dadurch andere Eigenschaften, wie Festigkeit, elastische Dehnung oder das Korrosionsverhalten, wesentlich beeinträchtigt werden.

Diese Aufgabe wird mit den in den Patentansprüchen angegebenen hochfesten Formkörpern gelöst.

Die erfindungsgemäßen Formkörper sind dadurch gekennzeichnet, dass sie aus einem Werkstoff bestehen, der in seiner Zusammensetzung der Formel

Zrₐ (E1)_{b} (E2)_{c} (E3)_{d} (E4)ₑ

entspricht, worin
E1 aus einem Element oder mehreren Elementen der mit den Elementen Nb, Ta, Mo, Cr, W, V, Hf und Y gebildeten Gruppe,
E2 aus einem Element oder mehreren Elementen der mit den Elementen Cu, Au, Ag, Pd und Pt gebildeten Gruppe,
E3 aus einem Element oder mehreren Elementen der mit
E3 aus einem Element oder mehreren Elementen der mit den Elementen Ni, Co, Fe, Zn und Mn gebildeten Gruppe und
E4 aus einem Element oder mehreren Elementen der mit den Elementen Al, Ga, Si, P, C, B, Sn, Pb und Sb gebildeten Gruppe
besteht, mit
a = 100-(b+c+d+e)
b = 5 bis 15
c = 5 bis 15
d = 0 bis 15
e = 5 bis 15
(a, b, c, d, e in Atom-%)
und mit gegebenenfalls geringen, herstellungstechnisch bedingten Zusätzen und Verunreinigungen.

Ein weiteres kennzeichnendes Merkmal besteht darin, dass die Formkörper ein homogenes mikrostrukturelles Gefüge besitzen, das aus einer glasartigen oder nanokristallinen Matrix mit darin eingebetteter duktiler dendritischer kubisch raumzentrierten Phase besteht, wobei mit einem geringen Volumenanteil von maximal 10 % eine dritte Phase enthalten sein kann.

Vorteilhaft ist es, wenn der Werkstoff für E1 das Element Nb, für E2 das Element Cu, für E3 das Element Ni und für E4 das Element Al enthält.

Zur Realisierung besonders vorteilhafter Eigenschaften sollte der Werkstoff eine Zusammensetzung mit b = 6 bis 10, c = 6 bis 11, d = 0 bis 9 und e = 7 bis 12 aufweisen.

Vorteilhaft ist eine Zusammensetzung mit den Verhältnissen Zr : Nb = 5 : 1 bis 11 : 1 sowie Zr : Al = 6 : 1 bis 9 : 1.

Die im Werkstoff enthaltene dendritisch kubisch raumzentrierten Phase sollte vorteilhaft eine Zusammensetzung mit b = 7 bis 15, c = 3 bis 9, d = 0 bis 3 und e = 7 bis 10 aufweisen (Zahlenangaben in Atom-%).
Ein Werkstoff mit besonders guten Eigenschaften besteht aus Zr₆₆,₄Nb₆,₄Cu_{10,5}Ni_{8,7}Al₈ (Zahlenangaben in Atom-%).

Ein weiterer Werkstoff mit besonders guten Eigenschaften besteht aus Zr₇₁Nb₉Cu₈Ni₁Al₁₁ (Zahlenangaben in Atom-%) .

Der Volumenanteil der gebildeten dendritischen kubisch raumzentrierter Phase in der Matrix beträgt erfindungsgemäß 25% bis 95%, vorzugsweise 50% bis 95%.

Die Länge der Primär-Dendritenachsen liegt im Bereich von 1 µm bis 100 µm und der Radius der Primär-Dendriten beträgt 0,2 µm bis 2 µm.

Zur Herstellung der Formkörper wird durch Gießen der Zirkon-Legierungsschmelze in eine Kupferkokille ein Halbzeug oder das fertige Gußteil hergestellt.

Der Nachweis der dendritischen kubisch raumzentrierter Phase in der glasartigen oder nanokristallinen Matrix und die Bestimmung der Größe und des Volumenanteils der dendritischen Ausscheidungen kann über Röntgenbeugung, Rasterelektronenmikroskopie oder Transmissionselektronenmikroskopie erfolgen.

### Wege zur Ausführung der Erfindung

Die Erfindung ist nachstehend anhand von Ausführungsbeispielen näher erläutert.

### Beispiel 1

Eine Legierung mit der Zusammensetzung Zr₇₁Nb₉CU₈Ni₁Al₁₁ (Zahlenangaben in Atom-%) wird in eine zylinderförmige Kupferkokille mit Innendurchmesser 5 mm abgegossen. Der erhaltene Formkörper besteht aus einer glasartigen Matrix und darin eingebetteter duktiler kubisch raumzentrierter Phase. Der Volumenanteil der dendritischen Phase beträgt ca. 50%. Dadurch wird eine Bruchdehnung von 3,5% bei einer Bruchfestigkeit von 1791 MPa erreicht. Die elastische Dehnung an der technischen Streckgrenze (0,2% Dehngrenze) beträgt 2,5% bei einer Festigkeit von 1638 MPa. Der Elastizitätsmodul beträgt 72 GPa.

### Beispiel 2

Eine Legierung mit der Zusammensetzung Zr₇₁Nb₉Cu₈Ni₁Al₁₁ (Zahlenangaben in Atom-%) wird in eine zylinderförmige Kupferkokille mit Innendurchmesser 3 mm abgegossen. Der erhaltene Formkörper besteht aus einer nanokristallinen Matrix und darin eingebetteter duktiler kubisch raumzentrierter Phase. Der Volumenanteil der dendritischen Phase beträgt ca. 95%. Dadurch wird eine Bruchdehnung von 5,4% bei einer Bruchfestigkeit von 1845 MPa erreicht. Die elastische Dehnung an der technischen Streckgrenze (0,2% Dehngrenze) beträgt 1,5% bei einer Festigkeit von 1440 MPa. Der Elastizitätsmodul beträgt 108 GPa.

### Beispiel 3

Eine Legierung mit der Zusammensetzung Zr₆₆,₄Nb₄,₄Mo₂Cu_{10,5},Ni₈,₇Al₈ (Zahlenangaben in Atom-%) wird in eine zylinderförmige Kupferkokille mit Innendurchmesser 5 mm abgegossen. Der erhaltene Formkörper besteht aus einer glasartigen Matrix und darin eingebetteter duktiler kubisch raumzentrierter Phase. Der Volumenanteil der dendritischen Phase beträgt ca. 50%. Dadurch wird eine Bruchdehnung von 3,4% bei einer Bruchfestigkeit von 1909 MPa erreicht. Die elastische Dehnung an der technischen Streckgrenze (0,2% Dehngrenze) beträgt 2,1% bei einer Festigkeit von 1762 MPa. Der Elastizitätsmodul beträgt 94 GPa.

### Beispiel 4

Eine Legierung mit der Zusammensetzung Zr₇₀Nb_{10,5}Cu₈Co₂Al_{9,5} (Zahlenangaben in Atom-%) wird in eine zylinderförmige Kupferkokille mit Innendurchmesser 3 mm abgegossen. Der erhaltene Formkörper besteht aus einer nanokristallinen Matrix und darin eingebetteter duktiler kubisch raumzentrierter Phase. Der Volumenanteil der dendritischen Phase beträgt ca. 95%. Dadurch wird eine Bruchdehnung von 6,2% bei einer Bruchfestigkeit von 1680 MPa erreicht. Die elastische Dehnung an der technischen Streckgrenze (0,2% Dehngrenze) beträgt 1,9% bei einer Festigkeit von 1401 MPa. Der Elastizitätsmodul beträgt 84 GPa.

## Patentansprüche

1. Hochfeste, bei Raumtemperatur plastisch verformbare berylliumfreie Formkörpern aus Zirkonlegierungen, **dadurch gekennzeichnet, dass** die Formkörper aus einem Werkstoff bestehen, der in seiner Zusammensetzung der Formel
Zrₐ (E1)_{b} (E2)_{c} (E3)_{d} (E4)ₑ
entspricht, worin
E1 aus einem Element oder mehreren Elementen der mit den Elementen Nb, Ta, Mo, Cr, W, V, Hf und Y gebildeten Gruppe,
E2 aus einem Element oder mehreren Elementen der mit den Elementen Cu, Au, Ag, Pd und Pt gebildeten Gruppe,
E3 aus einem Element oder mehreren Elementen der mit den Elementen Ni, Co, Fe, Zn und Mn gebildeten Gruppe und
E4 aus einem Element oder mehreren Elementen der mit den Elementen Al, Ga, Si, P, C, B, Sn, Pb und Sb gebildeten Gruppe
besteht, mit
a = 100-(b+c+d+e)
b = 5 bis 15
c = 5 bis 15
d = 0 bis 15
e = 5 bis 15
(a, b, c, d, e in Atom-%)
und mit gegebenenfalls geringen, herstellungstechnisch bedingten Zusätzen und Verunreinigungen,
und dass die Formkörper ein'homogenes mikrostrukturelles Gefüge besitzen, das aus einer glasartigen oder nanokristallinen Matrix mit darin eingebetteter duktiler dendritischer kubisch raumzentrierten Phase besteht, wobei mit einem geringen Volumenanteil von maximal 10 % eine dritte Phase enthalten sein kann.

2. Formkörper nach Anspruch 1, **dadurch gekennzeichnet, dass** der Werkstoff vorzugsweise für E1 das Element Nb, für E2 das Element Cu, für E3 das Element Ni und für E4 das Element A1 enthält.

3. Formkörper nach Anspruch 1, **dadurch gekennzeichnet, dass** der Werkstoff eine Zusammensetzung mit b = 6 bis 10, c = 6 bis 11, d = 0 bis 9 und e = 7 bis 12 aufweist.

4. Formkörper nach Anspruch 1, **dadurch gekennzeichnet**, das der Werkstoff eine Zusammensetzung mit den Verhältnissen Zur : Nb = 5 : 1 bis 11 : 1 sowie Zr : Al = 6: 1 bis 9 : 1 aufweist.

5. Formkörper nach Anspruch 1, **dadurch gekennzeichnet, dass** die im Werkstoff enthaltene dendritisch kubisch raumzentrierten Phase eine Zusammensetzung mit b = 7 bis 15, c = 3 bis 9, d = 0 bis 3 und e = 7 bis 10 aufweist.

6. Formkörper nach Anspruch 1, **dadurch gekennzeichnet**, das der Werkstoff aus Zr₆₆,₄Nb₆,₄CU₁₀,₅Ni₈,₇Al₈ (Zahlenangaben in Atom-%) besteht.

7. Formkörper nach Anspruch 1, **dadurch gekennzeichnet, dass** der Werkstoff aus Zr₇₁Nb₉Cu₈Ni₁Al₁₁ (Zahlenangaben in Atom-%) besteht.

8. Formkörper nach Anspruch 1, **dadurch gekennzeichnet, dass** der Volumenanteil der gebildeten dendritischen kubisch raumzentrierten Phase in der Matrix 25% bis 95%, vorzugsweise 50% bits 95% beträgt.

9. Formkörper nach Anspruch 1, **dadurch gekennzeichnet, dass** in der dendritischen kubisch raumzentrierten Phase die Länge der Primär-Dendritenachsen im Bereich von 1 µm bis 100 µm liegt und der Radius der Primär-Dendriten 0,2 µm bis 2 µm beträgt.

## Claims

1. High-strength, beryllium-free, moulded zirconium alloy objects which are plastically deformable at room temperature, **characterized in that** the moulded objects consist of a material which in its composition conforms to the formula
Zrₐ (E1)_{b} (E2)_{c} (E3)_{d} (E4)ₑ
where
E1 consists of one or more elements selected from the group consisting of the elements Nb, Ta, Mo, Cr, W, V, Hf and Y,
E2 consists of one or more elements selected from the group consisting of the elements Cu, Au, Ag, Pd and Pt,
E3 consists of one or more elements selected from the group consisting of the elements Ni, Co, Fe, Zn and Mn, and
E4 consists of one or more elements selected from the group consisting of the element Al, Ga, Si, P, C, B, Sn, Pb and Sb,
where
a = 100-(b+c+d+e)
b = 5 to 15
c = 5 to 15
d = 0 to 15
e = 5 to 15
(a, b, c, d, e in atom%)
with or without minor manufacturing admixtures and impurities,
and **in that** the moulded objects have a homogeneous microstructural fabric which consists of a glassy or nanocrystalline matrix having a ductile dendritic body-centred cubic phase embedded therein, wherein a third phase may be present in a low volume fraction of not more than 10%.

2. Moulded objects according to Claim 1, **characterized in that** the material preferably contains the element Nb for E1, the element Cu for E2, the element Ni for E3 and the element Al for E4.

3. Moulded objects according to Claim 1, **characterized in that** the material has a composition where b = 6 to 10, c = 6 to 11, d = 0 to 9 and e = 7 to 12.

4. Moulded objects according to Claim 1, **characterized in that** the material has a composition where the ratios Zr:Nb = 5:1 to 11:1 and Zr:Al = 6:1 to 9:1.

5. Moulded objects according to Claim 1, **characterized in that** the dendritic body-centred cubic phase in the material has a composition where b = 7 to 15, c = 3 to 9, d = 0 to 3 and e = 7 to 10.

6. Moulded objects according to Claim 1, **characterized in that** the material consists of Zr_{66.4}Nb_{6.4}Cu_{10.5}Ni_{8.7}Al₈ (numerical data in atom%) .

7. Moulded objects according to Claim 1, **characterized in that** the material consists of Zr₇₁Nb₉Cu₈Ni₁Al₁₁ (numerical data in atom%) .

8. Moulded objects according to Claim 1, **characterized in that** the volume fraction of the dendritic body-centred cubic phase in the matrix is 25% to 95%, preferably 50% to 95%.

9. Moulded objects according to Claim 1, **characterized in that** in the dendritic body-centered cubic phase the length of the primary dendrite axes is in the range from 1 µm to 100 µm and the radius of the primary dendrites is 0.2 µm to 2 µm.

## Revendications

1. Corps moulés en alliages de zirconium exempts de béryllium, plastiquement déformables à température ambiante et présentant une résistance mécanique élevée, **caractérisés en ce que** lesdits corps moulés sont constitués d'un matériau dont la composition correspond à la formule
Zrₐ (E1)_{b} (E2)_{c} (E3)_{d} (E4)ₑ
dans laquelle
E1 est constitué d'un élément ou de plusieurs éléments issus du groupe formé par les éléments Nb, Ta, Mo, Cr, W, V, Hf et Y,
E2 est constitué d'un élément ou de plusieurs éléments issus du groupe formé par les éléments Cu, Au, Ag, Pd et Pt,
E3 est constitué d'un élément ou de plusieurs éléments issus du groupe formé par les éléments Ni, Co, Fe, Zn et Mn, et
E4 est constitué d'un élément ou de plusieurs éléments issus du groupe formé par les éléments Al, Ga, Si, P, C, B, Sn, Pb et Sb,
avec
a = 100-(b+c+d+e)
b = 5 à 15
c = 5 à 15
d = 0 à 15
e = 5 à 15
(a, b, c, d, e en pourcentage atomique)
des additifs issus du procédé de préparation et des impuretés pouvant, le cas échéant,
être présents en faibles quantités,
et que les corps moulés présentent une microstructure homogène constituée d'une matrice vitreuse ou nanocristalline dans laquelle est incorporée une phase ductile et dendritique présentant une structure cubique à corps centré, une troisième phase pouvant être présente dans une proportion ne dépassant pas 10 % en volume.

2. Corps moulés selon la revendication 1, **caractérisés en ce que** le matériau contient préférentiellement pour E1 l'élément Nb, pour E2 l'élément Cu, pour E3 l'élément Ni et pour E4 l'élément Al.

3. Corps moulés selon la revendication 1, **caractérisés en ce que** le matériau présente une composition pour laquelle b = 6 à 10, c = 6 à 11, d = 0 à 9 et e = 7 à 12.

4. Corps moulés selon la revendication 1, **caractérisés en ce que** le matériau présente une composition avec des rapports Zr : Nb = 5 : 1. à 11 : 1 ainsi que Zr : Al = 6 : 1 à 9 : 1.

5. Corps moulés selon la revendication 1, **caractérisés en ce que** la phase dendritique à structure cubique à corps centré contenue dans le matériau présente une composition pour laquelle b =7 à 15, c = 3 à 9, d = 0 à 3 et e = 7 à 10.

6. Corps moulés selon la revendication 1, **caractérisées en ce que** le matériau est constitué de Zr_{66,4}Nb_{6,4}Cu_{10,5}Ni_{8,7}Al₈ (indications en pourcentage atomique).

7. Corps moulés selon la revendication 1, **caractérisées en ce que** le matériau est constitué de Zr₇₁Nb₉Cu₈Ni₁Al₁₁ (indications en pourcentage atomique).

8. Corps moulés selon la revendication 1, **caractérisés en ce que**, dans la matrice, la proportion de la phase dendritique formée présentant une structure cubique à corps centré est de 25 % à 95 % en volume, préférentiellement de 50 % à 95 % en volume.

9. Corps moulés selon la revendication 1, **caractérisées en ce que**, dans la phase dendritique présentant une structure cubique à corps centré, les axes des dendrites primaires présentent une longueur comprisse entre 1 µm et 100 µm et les dendrites primaires présentent un rayon compris entre 0,2 µm et 2 µm.
